# EUROPÄISCHE PATENTSCHRIFT

(11) **EP 0 626 734 B1**
(45) Veröffentlichungstag und Bekanntmachung des Hinweises auf die Patenterteilung: **12.03.1997**
(21) Anmeldenummer: 94104855.5
(22) Anmeldetag: 28.03.1994
(51) Int. Cl.: H01M 10/40, C08K 5/00

(54) **Wiederaufladbare galvanische Lithiumzelle**
Rechargeable galvanic lithiumcell
Pile galvanique rechargeable au lithium

(30) Priorität: 21.05.1993 DE 4317032
(43) Veröffentlichungstag der Anmeldung: 30.11.1994
(73) Patentinhaber: VARTA Batterie Aktiengesellschaft, 30419 Hannover (DE)
(72) Erfinder: Herr, Rudolf, Dr., D-65779 Kelkheim (DE); Praas, Hans-Walter, Dr., D-65779 Kelkheim (DE)
(74) Vertreter: Kaiser, Dieter Ralf, Dipl.-Ing.

(56) Entgegenhaltungen:
- WO-A-92/02966
- CHEMICAL ABSTRACTS, vol. 116, no. 12, 30.März 1992 Columbus, Ohio, US; abstract no. 128072, YAGUPOL'SKII 'TRIS(FLUOROSULFONYL)METHANIDE -C(SO2F)3 - AN EFFECTIVE STABILIZING NONNUCLEOPHILIC CARBANION'
- CHEMICAL ABSTRACTS, vol. 94, no. 17, 27.April 1981 Columbus, Ohio, US; abstract no. 139146, KLOETER GERHARD 'TRIS(FLUOROSULFONYL)METHANE, HC(SO2F)3'

## Beschreibung

Die Erfindung betrifft eine wiederaufladbare galvanische Lithiumzelle mit einer negativen Elektrode, einer positiven Elektrode und einem Elektrolyten, der aus einer Mischung von mehreren organischen Lösungsmitteln oder aus organischen Polymeren und einem darin gelösten Alkalisalz besteht.

Lithiumzellen enthalten wegen der hohen Reaktivität des Alkalimetalls ausschließlich Elektrolyte auf der Basis nichtwäßriger organischer Lösungsmittel. Solche Elektrolyte setzen sich aus einem Lösungsmittel, z.B. Propylenkarbonat, Ethylenkarbonat, Tetrahydrofuran, Dimethoxyethan, γ-Butyrolacton oder dergleichen, auch aus Mischungen unter denselben, sowie aus einem darin gelösten Leitsalz zusammen.

Als Leitsalze werden Lithiumsalze wie z.B. LiAsF₆, LiClO₄, LiBF₄, LiSbF₆, LiAlCl₄ oder LiCF₃SO₃ verwendet. Ihre Eignung setzt eine gute Dissoziationsfähigkeit in dem jeweiligen Lösungsmittel voraus, damit eine ausreichende Anzahl ionischer Ladungsträger für die elektrolytische Stromleitung vorhanden ist.

Die Leitfähigkeiten guter organischer Elektrolyte sollten mindestens in der Größenordnung von 10⁻³ S x cm⁻¹ liegen.

Weitere Bedingungen, welche die gelösten Salze in den galvanischen Lithiumelementen ebenso wie die Lösungsmittel erfüllen müssen, bestehen darin, daß es sich um nichttoxische Stoffe handelt und daß sie thermisch und gegenüber dem aggressiven Lithium im Potentialbereich 0 bis 4 V vs. Li/Li⁺ auch elektrochemisch stabil sind.

In dieser Hinsicht lassen sogar gut eingeführte und bewährte Leitsalze noch Wünsche offen. So ist bei Perchloraten die Gefahr einer Detonation gegeben. Andere Salze wiederum, die ein komplexiertes Fluorid-Anion aufweisen, sind nach A. Dominey et al. (Proc. Intersoc. Energy Convers. Eng. Conf. 1990 (25), 3, 382-4) anfällig gegen eine Reduktion des Zentralions, wenn dieses einen entsprechenden Metallcharakter besitzt, z.B. bei SbF₆⁻, während sich Anionen wie BF₄⁻, PF₆⁻ oder AsF₆⁻ mit einem Nichtmetall als Zentralion thermisch instabil verhalten.

Das ebenso bekannte Lithiumtrifluormethansulfonat, LiCF₃SO₃, ist zwar stabil, bringt jedoch als Leitsalz keine optimale Leitfähigkeit.

Als ein für wiederaufladbare Lithiumbatterien mit Polymerelektrolyten geeignetes Leitsalz nennt Dominey (Zit. siehe weiter oben) das Lithium-tris (trifluormethansulfonyl)methanid, LiC(CF₃SO₂)₃, welches thermisch stabil ist und dessen maximale Leitfähigkeit (in einem Polymerelektrolyten) er mit 5 x 10⁻⁴ (Ohm x cm)⁻¹ bei 25°C angibt. Zum Vergleich wird als Leitfähigkeitswert einer 1,0molaren Lösung dieses Salzes in Tetrahydrofuran 1 x 10⁻² (Ohm x cm)⁻¹ bei 25°C genannt.

Die dieser dreifach substituierten Methanverbindung zugrunde liegende freie Säure, HC(CF₃SO₂)₃, wurde erstmals von L.Turowsky und K.Seppelt (Inorg. Chem. 27, 2135-2137(1988)) dargestellt.

Weitere fluorierte "Methansalze" für die Verwendung in nichtwässerigen Batterieelektrolyten wurden auch bereits in der PCT-Anmeldung WO92/02966 vorgeschlagen. Diese lassen sich formal von einer einfacher gebauten "Säure", nämlich dem Tris(fluorsulfonyl)methan, HC(SO₂F)₃. dadurch ableiten, daß die drei F-Atome durch halogenierte Alkylgruppen und das H-Atom durch ein einwertiges Metallkation, Me⁺, ersetzt werden. Die eben genannte Säure haben G. Klöter, H.Pritzkow und K.Seppelt (Angew. Chem. 1980, 92, 954) erstmals synthetisiert.

Der Erfindung liegt die Aufgabe zugrunde, eine Lithiumzelle mit einem nichtwäßrigen Elektrolyten anzugeben, dessen Leitsalzkomponente den Ansprüchen an toxische Unbedenklichkeit, gute Dissoziierbarkeit des Metallatoms sowie chemische und thermische Stabilität noch besser als die bislang gebräuchlichen Leitsalze genügt.

Die Aufgabe wird erfindungsgemäß mit einer galvanischen Lithiumzelle gelöst, wie sie im Patentanspruch 1 definiert ist.

Danach besteht der Elektrolyt der neuen Zelle aus einer Mischung von mehreren organischen Lösungsmitteln oder aus organischen Polymeren, in denen als Leitsalz Lithium tris(fluorsulfonyl)methanid, LiC(SO₂F)₃, aufgelöst ist.

Die organischen Lösungsmittel in der neuen Zelle haben aprotischen Charakter und sind vorzugsweise Ester.

Als ein besonders günstiges Lösungsmittel für das Elektrolytsalz gemäß der Erfindung hat sich Ethylenkarbonat (EC) erwiesen. Allerdings muß dieses, da es bei Raumtemperatur fest ist, mit anderen leichter flüchtigen Estern abgemischt werden.

Der Anteil des Ethylenkarbonats an der Lösungsmittelmischung sollte zwischen 30 und 70 Vol%, vorzugsweise bei etwa 50 Vol% liegen. Der Rest bis 100 Vol% sollte auf zumindest einen Ester aus der Gruppe Propylenkarbonat (PC), Diethylkarbonat (DEC), Dimethylkarbonat (DMC) entfallen.

Alle diese Ester zeichnen sich durch ein hohes Solvatationsvermögen aus. Dank dieser Eigenschaft löst sich das erfindungsgemäße Lithiumsalz in ausreichender Menge auf, um eine hohe elektrische Leitfähigkeit zu erzielen.

Die Anwendungskonzentration des LiC(SO₂F)₃ in der Lösungsmittelmischung liegt erfindungsgemäß zwischen 0,6 und 1,3 M, vorzugsweise bei ca. 1 M. Das neue Lithiumsalz erweist sich unter allen praktischen Betriebsbedingungen der Zelle, insbesondere gegenüber dem reduktiven Einfluß der Li-Elektrode und dem oxidierenden Einfluß der positiven Elektrode, in hervorragendem Maße als chemisch stabil.

Das Anwendungsgebiet des neuen Leitsalzes erstreckt sich auch auf Lithiumzellen mit höherviskosen, gelartigen Polymerelektrolyten, z.B. auf der Basis von Polyethylenoxid, Polyphosphazenen, Polyvinylethern oder Polysiloxanen. Weiterhin ist das neue Leitsalz einsetzbar in sogenannten Polymerzellen, bei denen zumindest eine der beiden Elektrodenpolaritäten aus einem leitfähigen Polymer wie Polyanilin, Polypyrrol oder Polyacetylen gebildet ist.

Erfindungsgemäße Lithiumzellen sind, dem überwiegenden Anwendungsbedarf entsprechend, Sekundärelemente. Sie schließen jedoch Zellen, die aufgrund des Elektrodenmaterials nur für Primär-Anwendungen geeignet sind, mit ein.

Die erfindungsgemäß einsetzbaren negativen Elektroden sind neben solchen aus reinem Li-Metall auch Legierungselektroden mit z.B. Al, Mg, Si als Legierungskomponente oder vorzugweise Lithium intercalierende Strukturen auf Graphit- oder Kohlebasis. Letztere haben als sogenannte Wirtssubstanzen die Fähigkeit, Li-lonen im Rhythmus von Ladung und Entladung reversibel in Zwischenschichten oder in Kanälen ihres Kristallgitters reversibel ein- und auszulagern.

Günstige positive Elektroden sind insbesondere Metalloxide wie CoO₂ oder Mischoxide des Kobalts und Nickels, die Schichtengitter bilden, oder im Spinellgitter kristallisierende Manganoxide. Diese Oxide lassen sich ähnlich wie die vorgenannten Kohleprodukte mit Lithium dotieren und entdotieren.

Die mit dem eigentlichen Spinell, MgAl₂O₄, isomorphen Manganoxide, auch Oxospinelle genannt, lassen sich durch die allgemeine Formel AB₂O₄ wiedergeben, in welcher A und B ein zwei-, drei- oder vierwertiges Kation eines der Metalle Ti, V, Cr, Mn, Fe, Co, Ni, Cu, Zn, Mg oder Al bedeuten und mindestens eines von beiden, A oder B, ein Übergangsmetall ist. Während die Sauerstoffatome ein negativ geladenes Rahmengitter aus Tetraedern und Oktaedern bilden, besetzen die A-Kationen darin die Tetraederlücken und die B-Kationen die Oktaederlücken.

Außer in diesem "normalen" Spinellgitter können Oxospinelle in einem inversen Strukturtyp auftreten. Bei diesem besetzt die Hälfte der B-Kationen Tetraederlücken, während die A-Kationen sich mit den restlichen B-Kationen in die Oktaederlücken teilen. Dieser Verteilung im inversen Spinelltyp trägt die allgmeine Formel B(AB)O₄ Rechnung.

Besonders vorteilhaft ist die Kombination einer Li intercalierenden Kohleelektrode mit einer Li intercalierenden Mischoxid-Gegenelektrode mit Schichtengitter oder mit einer Manganspinellelektrode eines der eben genannten Strukturtypen. Dabei resultiert eine sogenannte SWING-Zelle (vgl. J.Power Sources, Vol. 43 (1-3) 223-231 (1993).

Im folgenden wird die Erfindung durch praktische Beispiele näher beschrieben. Ergebnisse aus dem elektrischen Versuch sind durch Grafiken dargestellt.

Figur 1 zeigt die Entlade-/Ladespannung einer Elektrode LiₓC₆ vs. Li/Li⁺ in Gegenwart des erfindungsgemäßen Elektrolyten.

Figur 2 zeigt die Lade-/Entladespannung einer Zelle Li/LiCoO₂ mit erfindungsgemäßem Elektrolyten.

Figur 3 zeigt die Lade-/Entladespannung einer Zelle LiₓC/LiCoO₂ mit erfindungsgemäßem Elektrolyten.

### Beispiel 1:

2.15g LiC(SO₂F)₃ werden in 8ml einer Mischung aus 50:50 Vol% EC:DEC gelöst. Der so hergestellte Elektrolyt hat bei 22°C eine spezifische Leitfähigkeit von 6,55 10⁻³ S x cm⁻¹ Von den Gehäusehälften einer Flachzelle mit je 10cm² Elektrodenfläche ist die eine Hälfte mit einer homogenen Mischung aus 85mg Graphitpulver sowie 5mg Polyacrylatbinder und die andere Hälfte mit einer Li-Folie als Gegenelektrode beschickt. Beide Elektroden sind durch einen Polypropylenseparator elektrisch getrennt. Als Zellelektrolyt dienen 150µl der vorgenannten Mischung. Sie ist inbezug auf das LiC(SO₂F)₃ 1,0 molar.

Bei der ersten Entladung der Zelle mit 1 mA/cm² und einer Nachentladung mit 0.5mA/cm² bis OV vs. Li/Li⁺ können 360mAh/g Graphit entladen werden. Die folgende Ladung mit 0.5mA/cm² bis 1.0V vs. Li/Li⁺ erbringt 286mAh/g.

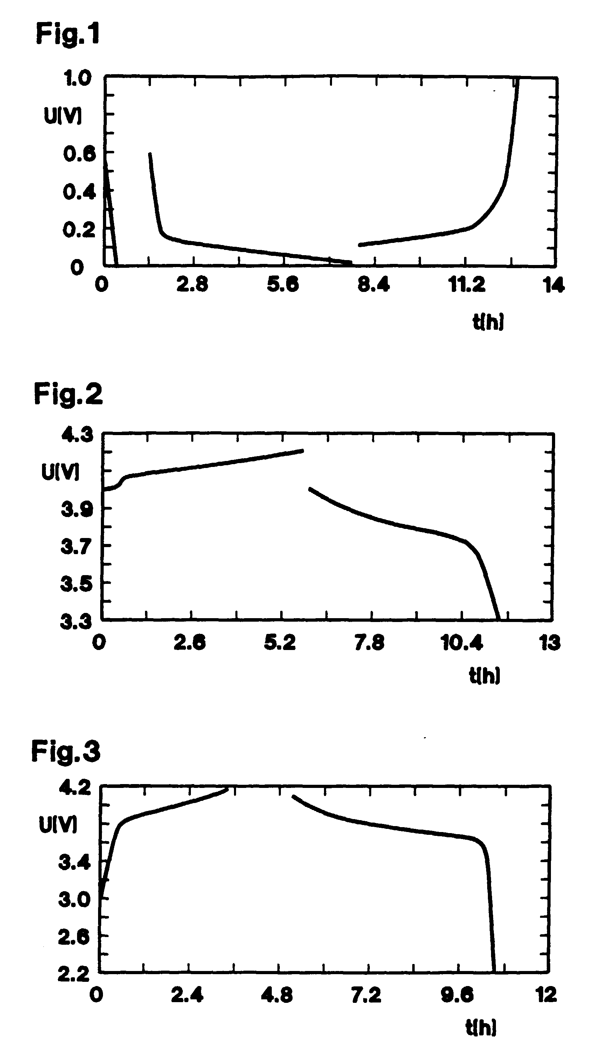

In Fig. 1 ist der Verlauf der Spannung U[V] einer solchen Halbzelle während eines Entlade-/Ladezyklus über der Zeit t[h] aufgetragen.

### Beipiel 2:

Der Testelektrolyt ist der gleiche wie in Beispiel 1.

Von den Gehäusehälften einer Flachzelle mit je 10cm² Elektrodenfläche ist die eine Hälfte mit einer homogenen Mischung aus 260mg LiCoO₂ sowie 10mg Binder und die andere Hälfte mit einer Li-Folie als Gegenelektrode beschickt. Beide Elektroden sind durch einen Polypropylenseparator elektrisch getrennt. Als Zellelektrolyt dienen 150µl der angegebenen Mischung.

Bei der ersten Ladung der Zelle mit 1 mA/cm² und einer Nachladung mit 0.5mA/cm² bis 4.2V vs. Li/Li⁺ werden 104mAh/g LiCoO₂ geladen. Die folgende Entladung mit 0.5mA/cm² auf 3.3V vs. Li/Li⁺ ergibt 96.3mAh/g, LiCoO₂.

In Fig. 2 ist der Verlauf der Zellspannung U[V] während eines Lade-/Entladezyklus über der Zeit t[h] aufgetragen.

### Beispiel 3:

Der Testelektrolyt ist der gleiche wie in Beispiel 1.

Von den Gehäusehälften einer Flachzelle mit je 10 cm² Elektrodenfläche ist die eine Hälfte mit einer homogenen Mischung aus 305 mg LiCoO₂ und 15 mg Polyacrylatbinder und die andere Hälfte mit einer homogenen Mischung aus 85 mg Graphitpulver und 5 mg Binder beschickt. Beide Elektroden sind durch einen Polypropylenseparator elektrisch getrennt. Als Zellelektrolyt dienen 150 µl der angegebenen Mischung.

Bei der ersten Ladung der Zelle mit 1mA/cm² bis 4,2 V und einer Nachladung mit 0,5 mA/cm² bis 4,2 V werden 34,4 mAh eingeladen; das entspricht Ladungsaufnahmen von 113 mAh/g LiCoO₂ und von 404 mAh/g Graphit.

Die erste Entladung mit 0,5 mA/cm² bis 2,3 V erbringt 27,4 mAh; das entspricht Stromausbeuten von 90 mAh/g LiCoO₂ bzw. 322 mAh/g Graphit. In Fig. 3 ist der Verlauf der Zellspannung U [V] während eines Lade-/Entladezyklus über der Zeit t [h] aufgetragen. Er ist in diesem Fall typisch für ein bei 4 Volt arbeitendes SWING-System.

## Patentansprüche

1. Wiederaufladbare galvanische Lithiumzelle mit einer negativen Elektrode, einer positiven Elektrode und einem Elektrolyten, der aus einer Mischung von mehreren organischen Lösungsmitteln oder aus organischen Polymeren und einem darin gelösten Alkalisalz besteht, dadurch gekennzeichnet, daß das Alkalisalz Lithium-tris(fluorsulfonyl)methanid, LiC(SO₂F)₃, ist.

2. Wiederaufladbare galvanische Lithiumzelle nach Anspruch 1, dadurch gekennzeichnet, daß die organischen Lösungsmittel Ester sind.

3. Wiederaufladbare galvanische Lithiumzelle nach Anspruch 2, dadurch gekennzeichnet, daß die Lösungsmittelmischung aus Ethylenkarbonat (EC) und mindestens einem weiteren Ester, der aus der Gruppe Propylenkarbonat (PC), Diethylkarbonat (DEC) und Dimethylkarbonat (DMC) ausgewählt ist, besteht.

4. Wiederaufladbare galvanische Lithiumzelle nach Anspruch 3, dadurch gekennzeichnet, daß der Anteil des Ethylenkarbonats an der Lösungsmittelmischung 30 bis 70 Vol%, vorzugsweise ca. 50 Vol%, beträgt.

5. Wiederaufladbare galvanische Lithiumzelle nach Anspruch 3 oder 4, dadurch gekennzeichnet, daß die Konzentration des LiC(SO₂F)₃ in der Lösungsmittelmischung 0,6- bis 1,3molar ist.

6. Wiederaufladbare galvanische Lithiumzelle nach einem der Ansprüche 1 bis 5, dadurch gekennzeichnet, daß die negative Elektrode vom Typ der Lithium-Legierungselektrode ist.

7. Wiederaufladbare galvanische Lithiumzelle nach einem der Ansprüche 1 bis 5, dadurch gekennzeichnet, daß die negative Elektrode vom Typ einer Lithium intercalierenden Kohlenstoffelektrode ist.

8. Wiederaufladbare galvanische Lithiumzelle nach einem der Ansprüche 1 bis 7, dadurch gekennzeichnet, daß die positive Elektrode eine Lithium intercalierende Metalloxidelektrode ist.

9. Wiederaufladbare galvanische Lithiumzelle nach einem der Ansprüche 1 bis 8, dadurch gekennzeichnet, daß die positive Elektrode eine Lithium intercalierende Elektrode vom Mangan-Spinelltyp ist.

10. Wiederaufladbare galvanische Lithiumzelle nach einem der Ansprüche 1 bis 9 dadurch gekennzeichnet, daß die positive und/oder negative Elektrode aus einem leitfähigen Polymer besteht.

## Claims

1. Rechargeable galvanic lithium cell having a negative electrode, a positive electrode and an electrolyte which comprises either a mixture of a number of organic solvents or organic polymers and an alkali metal salt dissolved therein, characterised in that the alkali metal salt is lithium tris(fluorosulphonyl) methanide, LiC(SO₂F)₃.

2. Rechargeable galvanic lithium cell according to Claim 1, characterised in that the organic solvents are esters.

3. Rechargeable galvanic lithium cell according to Claim 2, characterised in that the solvent mixture comprises ethylene carbonate (EC) and at least one further ester selected from the group propylene carbonate (PC), diethyl carbonate (DEC) and dimethyl carbonate (DMC).

4. Rechargeable galvanic lithium cell according to Claim 3, characterised in that the proportion of ethylene carbonate in the solvent mixture is from 30 to 70 vol-%, preferably approximately 50 vol-%.

5. Rechargeable galvanic lithium cell according to Claim 3 or 4, characterised in that the LiC(SO₂F)₃ concentration in the solvent mixture is from 0.6 to 1.3 molar.

6. Rechargeable galvanic lithium cell according to one of Claims 1 to 5, characterised in that the negative electrode is of the lithium alloy electrode type.

7. Rechargeable galvanic lithium cell according to one of Claims 1 to 5, characterised in that the negative electrode is of the lithium-intercalating carbon electrode type.

8. Rechargeable galvanic lithium cell according to one of Claims 1 to 7, characterised in that the positive electrode is a lithium-intercalating metal oxide electrode.

9. Rechargeable galvanic lithium cell according to one of Claims 1 to 8, characterised in that the positive electrode is a lithium-intercalating electrode of the manganese spinel type.

10. Rechargeable galvanic lithium cell according to one of Claims 1 to 9, characterised in that the positive and/or negative electrode is of a conductive polymer.

## Revendications

1. Cellule galvanique rechargeable au lithium ayant une électrode négative, une électrode positive et un électrolyte formés d'un mélange de plusieurs solvants organiques ou de polymères organiques dans lesquels est dissout un sel alcalin,
caractérisée en ce que
le sel alcalin est du lithium-tris(fluorsulfonyl)méthanure, LiC(SO₂F)₃.

2. Cellule galvanique rechargeable au lithium selon la revendication 1,
caractérisée en ce que
les solvants organiques sont des esters.

3. Cellule galvanique rechargeable au lithium selon la revendication 2,
caractérisée en ce que
le solvant auxiliaire se compose d'un carbonate d'éthylène (EC) et d'au moins un autre ester appartenant au groupe du propylènecarbonate (PC), du Diéthylcarbonate (DEC) et du diméthylcarbonate (DMC).

4. Cellule galvanique rechargeable au lithium selon la revendication 3,
caractérisée en ce que
la teneur en carbone d'éthylène dans le mélange du solvant est comprise entre 30 et 70 % en vol, et de préférence égale à 50 % en vol.

5. Cellule galvanique rechargeable au lithium selon la revendication 3 ou 4,
caractérisée en ce que
la concentration de LiC(SO₂F)₃ dans le solvant correspond à 0,6 jusqu'à 1,3 mol.

6. Cellule galvanique rechargeable au lithium selon l'une quelconque des revendications 1 à 5,
caractérisée en ce que
l'électrode négative est du type électrode d'un alliage de lithium.

7. Cellule galvanique rechargeable au lithium selon l'une quelconque des revendications 1 à 5,
caractérisée en ce que
l'électrode négative est du type d'une électrode de carbone intercalée avec du lithium.

8. Cellule galvanique rechargeable au lithium selon l'une quelconque des revendications 1 à 7,
caractérisée en ce que
l'électrode positive est une électrode d'oxyde de métal avec interposition de lithium.

9. Cellule galvanique rechargeable au lithium selon l'une quelconque des revendications 1 à 8,
caractérisée en ce que
l'électrode positive est une électrode intercalée avec du lithium de type manganèse/spinelle.

10. Cellule galvanique rechargeable au lithium selon l'une quelconque des revendications 1 à 9,
caractérisée en ce que
l'électrode positive et/ou négative est un polymère conducteur.
